# EUROPEAN PATENT SPECIFICATION

(11) **EP 2 339 921 B1**
(45) Date of publication and mention of the grant of the patent: **15.07.2015**
(21) Application number: 09782119.3
(22) Date of filing: 24.08.2009
(51) Int. Cl.: A23B 4/005, A23B 4/015, A23L 3/30, A23L 3/3409

(54) **METHOD FOR CLEANING AND/OR DISINFECTING A FOOD PRODUCT**
VERFAHREN FÜR DIE REINIGUNG UND/ODER DESINFEKTION EINES NAHRUNGSMITTELPRODUKTS
PROCÉDÉ POUR NETTOYER ET/OU DÉSINFECTER UN PRODUIT ALIMENTAIRE

(30) Priority: 22.08.2008 DK 200801146
(43) Date of publication of application: 06.07.2011
(73) Proprietor: Force Technology, 2605 Brøndby (DK)
(72) Inventor: KREBS, Niels, DK-2900 Hellerup (DK); NONBOE, Ulf, DK-2200 Copenhagen N (DK)
(74) Representative: Zacco Denmark A/S
(86) International application number: PCT/EP2009/060880
(87) International publication number: WO 2010/020696

(56) References cited:
- WO-A-02/078751
- WO-A-2007/047525
- WO-A-2008/003324
- FR-A- 2 811 574
- GB-A- 2 240 912
- JP-A- 2 259 303
- GARCIA M L ET AL: "EFFECT OF HEAT AND ULTRASONIC WAVES ON THE SURVIVAL OF TWO STRAINS OF BACILLUS SUBTILIS" 1 December 1989 (1989-12-01), JOURNAL OF APPLIED BACTERIOLOGY, BLACKWELL PUBLISHING LTD., OXFORD, GB, PAGE(S) 619 - 628 , XP000373561 ISSN: 0021-8847 the whole document

## Description

### FIELD OF THE INVENTION

The present invention relates generally to processing of a food or other biological product of animal origin (forth only denoted food product) by applying steam to a surface of the product. More specifically, the invention relates to and a method of processing a food product, the method comprising applying steam of a gas from a steam generator to at least a part of a food product for a predetermined period of time thereby cleaning and/or disinfecting at least a part of the food product.

By steam is to be understood any type of a vaporized liquid, a gas with or without dispersed liquid droplets, and/or any mixture thereof, at an appropriate temperature and pressure.

### BACKGROUND OF THE INVENTION

Upon reception at the abattoir, live animals will have spoilage micro-organisms present on their skin as well as inside their intestinal system. During the slaughtering process these micro-organisms may very well spread throughout the carcass surfaces, be they outside surfaces or as inside body cavities. Notably, the evisceration process operation carries a high risk for a surface contamination with intestinal content that can be difficult to diminish, especially on the inside surface area of a poultry body cavity.

While some previous cleaning and/or disinfecting procedures only clean the food product on the outside others also comprise treating the interior or the inside surface area (forth only denoted inner surface area) of a food product. One such combined procedure is performed on poultry carcasses by the commercially available IOBW (Inside-Outside Bird Washer) that operates through use of high pressure water sprays. In some countries (e.g. in USA) these water sprays may have the inclusion of a disinfection agent, e.g. based on chlorine.

It is commonly seen that these known cleaning and/or disinfecting procedures do not have the desired effect and that unwanted carcass contamination remains on the outer and/or inner surface areas, also after the said cleaning process.

Furthermore, it may also be of concern in a food processing facility to limit spreading of bacteria, intestinal content, or the like to other units of food products.

Throughout this text, inner surface area (or interior, inside surface area, etc.) of a food item is meant to be any surface area which is part of the inside of the food item in the traditional sense, even if the food item has had parts removed or cut away partly or fully. The outer surface is meant to be any outer surface area which is part of the outside of the food item in the traditional sense, even if the food item has had parts removed or cut away partly or fully. The food item may have at least one opening so the inner surface area can be reached so the effect of the present invention can be utilized also for the inner surface area.

One example of a type of food product that has an inner surface area that conventionally can be hard to clean efficiently in a processing plant is poultry like chicken, turkey, fowl, and so on.

Patent application US 2004/0105779 - by the same applicant - discloses a disinfection method and apparatus using steam and ultrasound.

Patent application WO 2007/047525 discloses ultrasonic preparation of meat products where ultrasound is used to reduce the microbial content in the meat. The ultrasound is provided by mechanical vibrations.

WO 2005/067741 discloses antimicrobial spray rinsing, sanitizing rinsing, or finishing rinsing involving the use of chemicals. A spray of water is used e.g. with a temperature of 5 - 30°C.

GB 2240912 discloses treating a carcass of meat for reducing the bacterial contamination applying steam. Steam is applied by a jet device for a period of time less than 15 seconds, preferably less than 10 seconds, and more preferably less than 5 seconds, whereby the temperature of the carcass is increased to at least 68,4 °C.

US 5,514,403 discloses spraying super-heated steam - having a temperature of between 250 - 300 °F - applied by nozzles to a exterior and interior surfaces of a carcass followed by rapid cooling by spray of a cooling liquid.

WO 2004/004470 discloses a spray assembly for ejecting liquid, fluid, vapour or other cleaning solution to a surrounding environment of a carcass.

WO 2008/003324 - by the same applicant - discloses enhancing the application of high intensity acoustic waves in a treatment zone by using one or more high intensity acoustic generators and/or reflectors.

JP 02259303 discloses applying steam and ultrasound in a chamber using a horn for the heating of a food product.

Patent specification US 5,484,615 and US 5,939,115 disclose decontamination of poultry. The poultry is transported into a tank where a disinfecting solution is introduced and where an ultrasonic wave generator directs ultrasonic waves against the poultry in the tank, i.e. in a liquid.

FR 2 811 574 B discloses sterilisation of substances wherein a meat product is subjected to ultrasonic energy to reduce microbial content.

FR 2 811 574 A discloses a steriliser, which comprises a chamber with baskets to hold the substances to be sterilised, such as food or pharmaceutical products, and incorporates an ultrasound vibrator to agitate the products during the sterilising process, e.g. by steam or hot water.

Some prior art steam applicators in relation to food processing are so-called (steam) jet devices. Such jet devices (whether they are driven by steam or another agent) may due to their nature be characterized in that the velocity and/or power obtained are somewhat focused, peak-like, or at least of a limited area, i.e. the max velocity and/or power are obtained over only a limited area near the center line of the exiting jet and then are reduced with the distance from the center line in accordance with a squared relationship (see e.g. Landau, L. and Lifshitz, E. Fluid mechanics. Butterworth-Heinemann, Oxford (2000) pp. 149-151 and pp. 316-320.).

This entrails that jet devices are not suitable for efficiently processing a large area at a time and thereby requires (larger) movement in relation to the processed food item and/or longer processing times as explained in the following.

The peak-like or focused distribution with relation to velocity and/or power of the exiting jet make it hard simply to increase the processing time in order to process every part of a given processing area sufficiently, since some part or point (i.e. the center line or center region of the jet) will provide substantially more energy than the surrounding area.

Basically, the jet has a high power and/or velocity at one location or area while a low power and/or velocity at the surrounding area. Typically, such (steam) jet devices will have an area of about 20 mm in diameter or less with sufficient velocity and/or power for an efficient treatment.

Typical jet devices have (supersonic) speeds at well above 343 m/s.

Thus there is a risk of destroying or damaging the food product at or near the center line and/or under-processing the surrounding area.

Therefore there may be a need to reduce the overall application of power (thereby e.g. making the treatment taking longer or being less effective) or move the center of the jet in an appropriate and controlled way according to the food product, so it is ensured that every part of the area of the food product to be processed is treated sufficiently.

For other steam applications, the steam is applied or diffused with a low or basically no substantial velocity of the steam to make a steam zone or fill a steam surrounding or steam chamber, etc. comprising a food product. Here the aim may e.g. be obtaining a higher pressure for the steam. In disinfection processes the heat of steam is usually used for the disinfection. The low velocity gives the drawbacks of a low energy transfer or heat exchange between the hotter steam and the colder food product and generally a low contact ratio between the steam and the food product hampering the efficiency or requiring longer processing times.

### OBJECT AND SUMMARY OF THE INVENTION

It is an object of the invention to provide a method that provides efficient cleaning and/or disinfection of one or more food products.

Another object is to provide a faster cleaning and/or disinfection process e.g. of only a few seconds duration, thereby creating the possibility of a simpler or shorter processing line layout in the abattoir or similar.

Another object is to provide cleaning and/or disinfection of a food product by a system that is not in direct contact with the food product(s) being processed.

Another object is to reduce or avoid cross-contamination between food items in an industrial plant.

This is achieved by a method of processing a food product, the method comprising applying steam of a gas from a steam generator to at least a part of a food product for a predetermined period of time thereby cleaning and/or disinfecting at least a part of the food product, the food product having an inner surface area and an outer surface area, wherein the applied steam of a gas is applied to at least a part of the outer and/or inner surface area with no direct contact between the steam generator and the food product and a velocity of said gas at said outer and/or inner surface area of the food product being at least about 8 meter pr. second and at most 100 about meter pr. second.

In this way, efficient cleaning and/or disinfection of a food product is enabled by applying steam to the outer and/or inner surface area of the food product. The use of steam as a means for cleaning and/or disinfection enables a very efficient cleaning and/or disinfection.

Furthermore, it has been found that by having a velocity of the gas that is at least 8 m/s at the outer and/or inner surface area of the food product is also suitable for an efficient kinetic cleaning of the outer and/or inner surface area, thereby removing unwanted carcass contamination remnants or other unwanted matter or particles on the outer and/or inner surface areas.

Additionally, such a velocity of at least 8 m/s also ensures an efficient way of reaching many, or even substantially all parts of the inner and/or outer surface area regardless of curvature, folds, shape, etc. E.g. for poultry carcasses many pores, folds, cavities, etc. exist after the poultry has been de-feathered. The specified velocity ensures that such areas are alto properly cleaned and/or disinfected.

Having a speed of less than 100 m/s ensures that no damage should arise on the food product. The speed may also be less than 90, 80, 70, 60 or 50 m/s.

Additionally, the application of steam to the outer and/or inner surface area of the food product without the steam generator, or other equipment parts such as rods or spears being in direct contact with the food product ensures that bacteria, intestinal contents and the like will not be transferred to the steam generator or to other equipment parts, thereby avoiding cross-contamination as could be the case with a cleaning and/or disinfecting device touching the food product.

Furthermore, the treatment is harmless to the food product and the environment since only steam is used as an agent. There is no transfer of additional substances to the food product and in turn to the consumer.

By steam is to be understood any type of a vaporised liquid, a gas with or without dispersed liquid droplets, and/or any mixture thereof, at an appropriate temperature and pressure.

In one embodiment, the velocity of said gas at said outer and/or inner surface area of the food product being applied with steam of a gas is at least about 10 - 12 meter pr. second.

Having an increased velocity may even increase the efficiency further but still maintaining the maximum of a 100 m/s.

Alternatively, the streaming gas velocity is about 10 - about 20 m/s, which have given very good results: or the velocity could even be larger.

Other examples of velocities are e.g. 25 m/s and larger.

In one embodiment, the method further comprises applying airborne high intensity and high power acoustic waves to at least a part of said steam of gas causing the part of said steam of gas to oscillate substantially at the frequency and substantially with the intensity and power of the acoustic waves.

The applied high intensity and high power acoustic waves enhance the heat transfer between the steam and the surface layer of food product(s) being processed by removing or minimizing the so-called laminar sub-layer thereby ensuring that more heat of the steam will be transferred to the food product(s) and ultimately thereby ensuring a faster and/or; more efficient processing time. So a more thorough treatment can be achieved in the same time span or even in a somewhat shorter time span.

Furthermore, the enhanced efficiency will enable a lower consumption of water and energy.

The use of airborne high intensity and high power acoustic waves maintains a no-contact approach with the food product, thereby potentially speeding up the process, e.g. for food products transported by a conveyor, a conveyor belt, or other transport mechanism and still avoiding or minimizing cross-contamination.

Additionally, the use of high intensity and high power acoustic waves will enhance reaching many, or even substantially all parts of the outer and/or inner surface area regardless of curvature, folds, shape, etc.

The present invention does neither involve applying acoustic waves in water nor applying acoustic waves from a system being in direct contact with a food product to be processed.

In one embodiment, a reflector reflects the high intensity and high power acoustic waves towards at least a part of the steam of gas. The reflector may have a parabolic or elliptic shape, or be shaped as a horn, or by other suitable design for the purpose.

In this way, a very efficient and focused direction of the generated acoustic waves towards the steam is provided so that acoustic waves may be brought in contact with the steam at an appropriate treatment zone with sufficient or optimal energy.

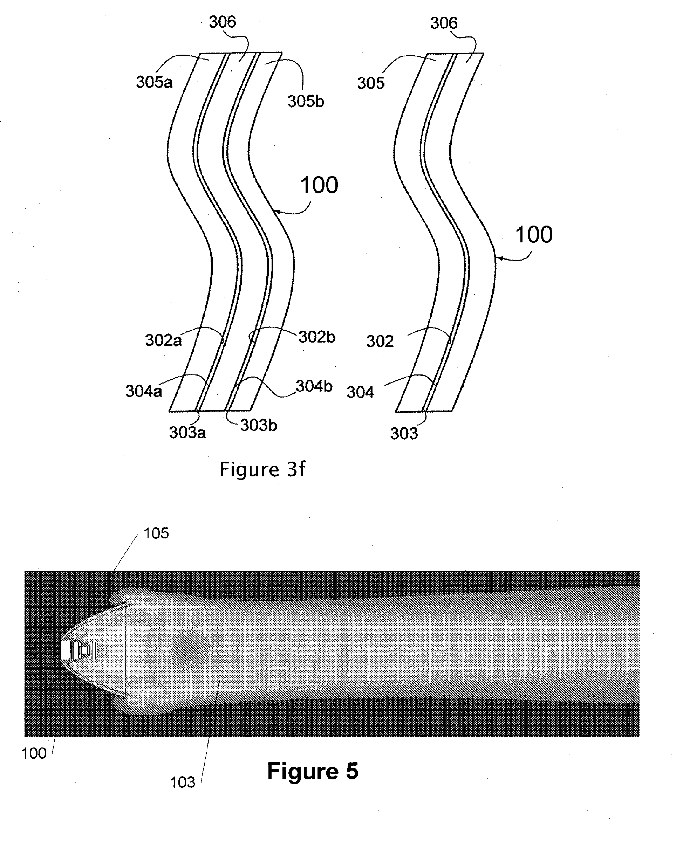

In one embodiment, a reflector reflects the high intensity and high power acoustic waves and the applied steam of a gas towards the food product. This is e.g. shown in connection with Figure 5.

More specifically, the applied steam and the applied acoustic waves are exiting their generator(s) away from a direction towards the food product and are reflected by the reflector in the direction towards the food product.

In this way, the steam may be expanded - e.g. by a parabolic or elliptical shaped reflector - to have an even larger extend. It has been shown, that it is possible to obtain an area of about 100 mm in diameter with sufficient velocity and/or power for an efficient treatment, while (steam) jet devices typically has an area of 20 mm in diameter.

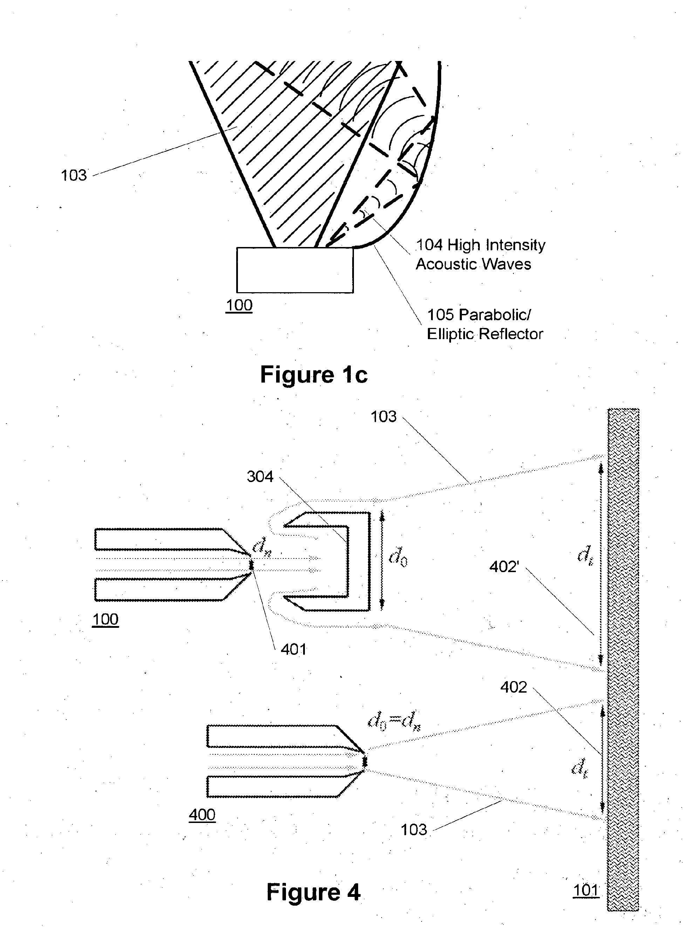

If the steam generator is a so called stem generator or static siren (generally of the Hartmann, or Lavavasseur families of devices) used in a configuration where the exiting steam is projected generally backwards (away from the top of the generator) and a reflector is located behind or below the generator good results have been obtained. The velocity will be slowed as a result of the design, i.e. including a cavity e.g. as shown in Figure 4, to be below 100 m/s or less.

At the same time a combination is made of steam and acoustic waves that have substantially uniform or homogenous mixture of steam, steam velocity, and sound pressure. This enhances the treatment and increases the treatment area to e.g. 100 mm as mentioned above.

In one embodiment, the predetermined period of time may be selected from:
o at least approximately 0.2 seconds
o at least approximately 0.4 seconds,
o approximately 0.4 seconds to approximately 2 seconds, and
o approximately 0.2 seconds to approximately 5 seconds.

The processing time may depend on the type(s) and/or amount of food product(s) being processing.

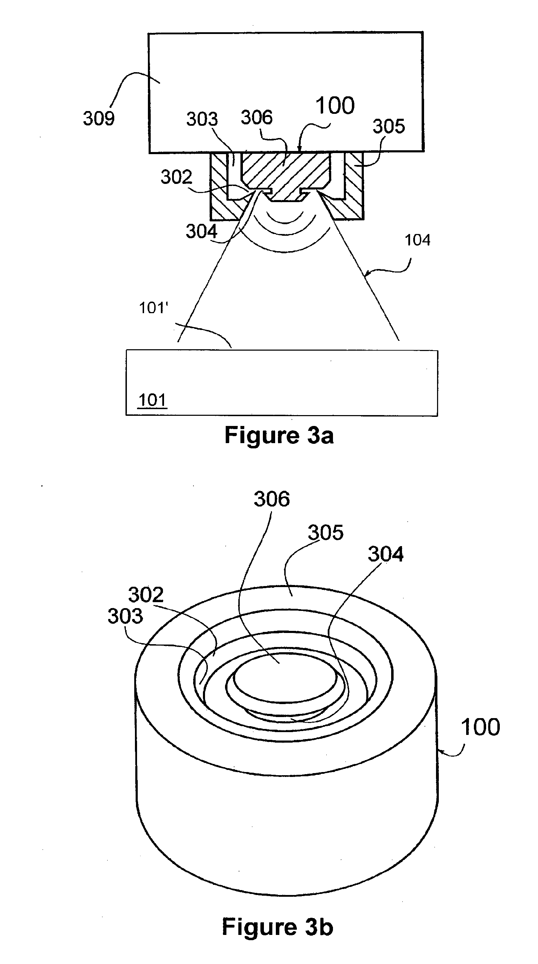

In one embodiment, the steam generator is a disc generator, e.g. as the ones shown in Figures 3a - 3f, that has a velocity and/or power distribution that is different from the so-called jet device. As indicated on Fig. 3a, the disc generator will generally have the steam exiting in a large (three dimensional) cone-shape. This has an advantage over e.g. jet devices that a larger area is treated by the steam and also that the area treated with steam is treated more uniformly, i.e. less peak-like or focused distribution of velocity and/or power but rather a more uniform one.

In one embodiment, the steam generator is a stem generator, e.g. as shown and explained in connection with Figure 4.

In one embodiment the steam generator is a static siren (a Hartmann device is an example of a static siren and both a disc and a stem generator are examples of Hartmann devices). Another static siren could be a Lavavasseur device).

By static siren is meant an acoustic generator with no moving parts as they are driven by kinetic energy of a gas, e.g. steam.

Even though, such devices may utilize a jet device their properties are different as the velocity of the supersonic jet is reduced to a having a subsonic velocity.

In one embodiment, the high intensity and high power acoustic waves are ultrasonic acoustic waves. Ultrasonic acoustic waves are less damaging to humans than sonic ones and will often be simpler to dampen and/or reflect. Alternatively, the acoustic waves can have audible or sonic frequencies.

The high intensity and high power acoustic waves may have a main or primary frequency between about 8 kHz and 70 kHz, between about 16 kHz and 50 kHz, or about between 20 kHz and 40 kHz. Alternatively, the main or primary frequency may be different.

In one embodiment, the high intensity and high power acoustic waves are generated by a high intensity and high power acoustic wave generator and has an acoustic sound pressure level at approximately 10 cm from an orifice of said generator may be selected from the group of:
- at least 120 dB,
- at least 140 dB,
- at least 160 dB,
- approximately 120 to approximately 165 dB, and
- approximately 120 to approximately 180 dB.

It is to be understood that if the distance between the orifice of the high intensity and high power acoustic wave generator to the food product to be treated is less than 10 cm, then a less acoustic sound pressure than the indicated ones may be usable.

Typically, a sound pressure level of at least 120 dB is sufficient to have an improvement on the steam treatment, where higher pressures, e.g. from 130 dB or from 140 dB, may give further improvements.

In one embodiment, the steam is aqueous steam. A relatively small amount of aqueous steam is able to transfer a high amount of heat energy, has only a low cost and leaves only harmless water as its residue.

In one embodiment, the steam is supplied under pressure from a pipe through orifices small enough to allow the steam passing the orifices at high velocity and providing the steam molecules with high kinetic energy.

In one embodiment, the steam and high intensity and high power acoustic waves are applied by the same high intensity and high power acoustic wave generator. This enables a more compact design of a treatment device. Furthermore, for some types of devices or generators (e.g. Hartmann, Lavavasseur design types, etc.) the steam is also used to generate the acoustic waves avoiding the need for an additional driving force.

In one embodiment, the steam and said high intensity and high power acoustic waves are generated and applied by different devices. One example is e.g. a device that generates the high intensity and high power acoustic waves using pressurized air or gas or the like and where the steam is supplied separately by one or more steam nozzles from a steam generator.

In this way, the steam supply may be limited and/or controlled with greater precision as the steam being supplied then is not responsible also for generating the appropriate sound pressure level of the high intensity and high power acoustic waves.

In one embodiment, the steam is caused to oscillate at such a high acoustic pressure level that the migration of the individual molecules reaches or exceeds the dimensional depth of the laminar sub-layer adjacent to a given food product.

The embodiments of the system according to the present invention correspond to the embodiments of the method according to the present invention and have the same advantages for the same reasons. Advantageous embodiments of the system are defined in the sub-claims and described in detail in the following.

### BRIEF DESCRIPTION OF THE DRAWINGS

These and other aspects of the invention will be apparent from and elucidated with reference to the illustrative embodiments shown in the drawings, in which:
Figure 1 a schematically illustrates one embodiment of the present invention;
Figure 1b schematically illustrates another embodiment of the present invention;
Figure 1c schematically illustrates yet another embodiment of the present invention;
Figure 2a schematically illustrates a (turbulent) flow over an inner and/or outer surface area of a food product without application of high intensity and high power acoustic waves;
Figure 2b schematically illustrates a flow over an inner and/or surface area of a food product, where the effect of applying high intensity and high power acoustic waves to/in gas surrounding or contacting the surface area is illustrated;
Figure 3a schematically illustrates an embodiment of a device for generating high intensity and high power acoustic waves;
Figure 3b shows an embodiment of a high intensity and high power acoustic wave device in form of a disc-shaped disc generator;
Figure 3c is a sectional view along the diameter of the high intensity and high power acoustic wave device (100) in Figure 3b illustrating the shape of the opening (302), the gas passage (303) and the cavity (304) more clearly;
Figure 3d illustrates an alternative embodiment of a high intensity and high power acoustic wave device, which is shaped as an elongated body;
Figure 3e shows a high intensity and high power acoustic wave device of the same type as in Figure 3d but shaped as a closed curve;
Figure 3f shows a high intensity and high power acoustic wave device of the same type as in Figure 3d but shaped as an open curve;
Figure 3g illustrates an alternative embodiment of a high intensity and high power acoustic wave device, which is shaped as an elongated body;
Figure 4 illustrates a steam (and acoustic) generator in the form of a static siren and a jet device; and
Figure 5 illustrates an alternative embodiment with a reflector.

### DESCRIPTION OF PREFERRED EMBODIMENTS

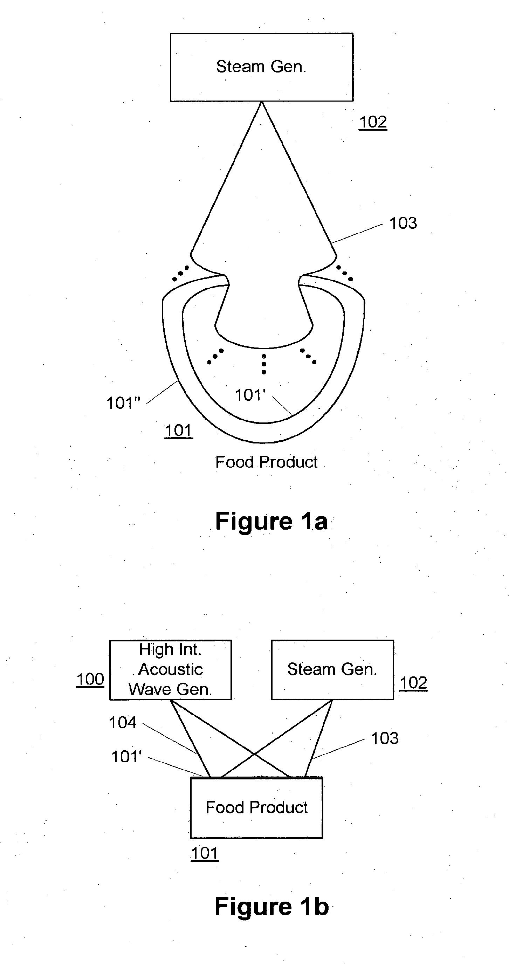

Figure 1 a schematically illustrates one embodiment of the present invention. Schematically illustrated are one or more food products (101) to be processed according to an aspect of the present invention.

Also illustrated is a representation of an inner surface area (101') and an outer surface area (101") of the food product(s) (101) to be processed.

In order to clean and/or disinfect the outer and/or inner surface area (101') of the food product (101) then steam (103) - e.g. in the form of a gas with or without dispersed liquid droplets, a vaporized liquid, and/or a mixture thereof etc. - is applied by a steam generator (102) to the outer and/or inner surface area (101') where the steam generator (102) applying the steam does not have any direct contact with the food product(s) (101). The steam generator (102) may even be completely or substantially completely outside the food product being processed, although it in some embodiments could have a part, e.g. a nozzle or the like, going into the inside cavity of the food product.

The use of steam as a means for cleaning and/or disinfection enables a very efficient cleaning and/or disinfection but also gives an easy and efficient way of affecting many or even substantially all parts of the outer and/or inner surface area regardless of curvature, folds, shape, etc. due to the steam being airborne.

Additionally, by applying steam to the outer and/or inner surface area of the food product without the steam generator being in direct contact with the food product ensures that bacteria, intestinal contents and the like will not be transferred to the steam generator thereby avoiding cross-contamination as could be the case with a cleaning and/or disinfecting device touching the food product.

Furthermore, the velocity of the applied gas is at least about 8 m/s and at most about 100 m/s at the outer and/or inner surface area of the food product enabling an efficient kinetic cleaning of the outer and/or inner surface area, thereby removing unwanted carcass contamination remnants or other unwanted matter or particles on the outer and/or inner surface areas.

Additionally, such a velocity of at least 8 m/s also ensures an efficient way of reaching many, or even substantially all parts of the inner and/or outer surface area regardless of curvature, folds, shape, etc. E.g. for poultry carcasses many pores, folds, cavities, etc. exist after the poultry has been de-feathered. The specified velocity ensures that such areas are also properly cleaned and/or disinfected.

It is to be understood that more than one food product may be processed by the steam generator (102) at the same time, e.g. by having a larger steam 'cone' and/or by having more than one steam outlet from the steam generator (102). Furthermore, an arrangement can comprise several steam generators.

The typical location in an abattoir of an embodiment of the present invention could be at a stage in the carcass processing where the animal has been opened up and an inner surface thereby is created and revealed and where a need exists for a cleaning and/or disinfection to take place. This typical location could be right after the evisceration process as is the typical case for commercial IOBW (Inside-Outside Bird Washer) units. The location of an embodiment of the present invention on the abattoir slaughter line could, however, also be different.

The velocity may also be at least about 10 meter pr. second, 12 meter pr. second, 25 meter pr. second (e.g. using a stem generator with the steam and the acoustic waves applied directly towards the food product(s)), or about 10 - 12 meter pr. second. Alternatively, the velocity is about 10 - about 20 m/s, which have given very good results, or the velocity could even be larger.

The steam generator (102) may also generate acoustic waves as described in the following. Alternatively, the steam may e.g. be supplied under pressure from a pipe through orifices small enough to allow the steam passing the orifices at high velocity and providing the steam molecules with high kinetic energy, which need not involve generation of high intensity and high power acoustic waves.

In one embodiment, the steam generator is a stem generator, e.g. as the ones shown in Figures 3a - 3f and 4, which has a velocity and/or power distribution that is different from the so-called jet device. As indicated on Fig. 3a, the stem generator will generally have the steam exiting in a large (three dimensional) cone-shape. This has an advantage over e.g. jet devices that a larger area is treated by the steam and also that the area treated with steam is treated more uniformly, i.e. no or at least less peak-like or focused distribution of velocity and/or power but rather more uniform or homogenous ones.

Figure 1b schematically illustrates another embodiment of the present invention. The embodiment corresponds to the one shown and explained in connection with Figure 1a with the addition of a high intensity and high power acoustic wave generator (100) generating high intensity and high power acoustic waves (104).

The generated high intensity and high power acoustic waves (104) and steam (103) - or a gas with or without dispersed liquid droplets, a vaporized liquid, and/or a mixture thereof etc. - are applied, by their respective generators, overlapping in time to the inner and/or outer surface area (101'; 101") of the solid food product(s) (101) to be treated. The acoustic waves (104) and the steam (103) may e.g. be applied overlapping physically in a relevant area of the surface area (101') of the food product(s) (101) or generally in such a way that the acoustic waves (104) will influence the steam (103) adjacent to the surface area (101') of the food product(s) (100) being treated or before the steam reaches the surface area (101'). In this way, cleaning and/or disinfection of an outer and/or inner surface of a food product can be improved.

The acoustic waves will cause the steam molecules or steam droplets to oscillate at the frequency and with the intensity and power of the acoustic waves. The steam molecules or steam droplets near the surface area (101') of the food product(s) (101) to be treated will vibrate at a high frequency and will minimize or remove the so-called laminar sub-layer present at the outer and/or inner surface area (101'; 101") of the solid food product(s) (101). The reduction of the laminar sub-layer will cause an increased heat transfer and heat transfer rate effected by the steam condensing on the surface area, (101') of the food product(s) (101), as explained in more detail in the following.

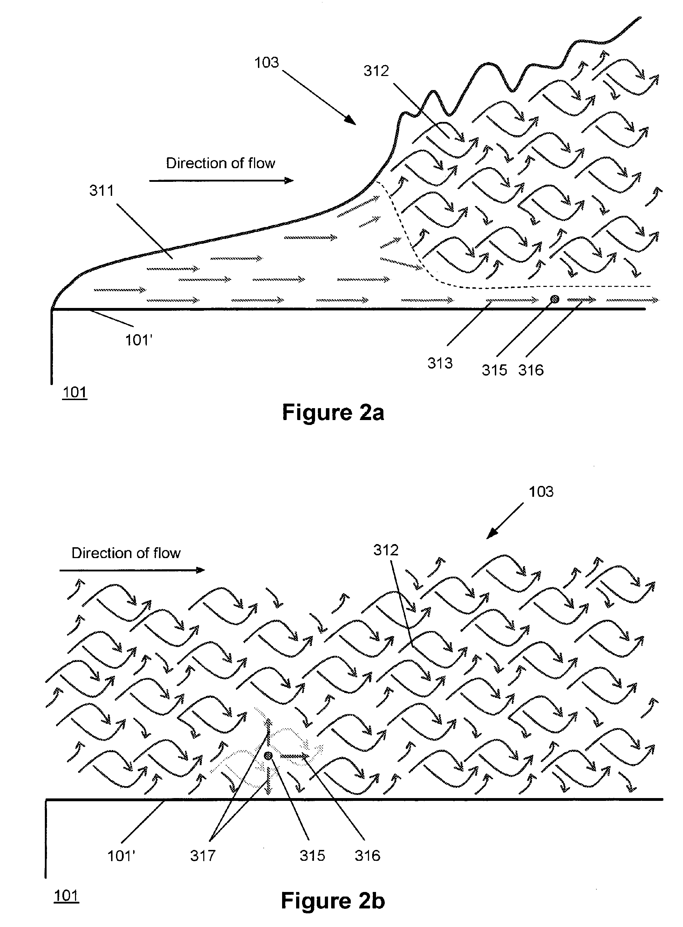

For nearly all practically occurring gas flows around a solid object such as a food product, the flow regime will be turbulent in the entirety of the flow volume; except for a layer covering all surfaces wherein the flow regime is laminar (see e.g. 313 in Figure 2a). This layer is often referred to as the laminar or boundary sub-layer. The thickness of this layer is a decreasing function of the Reynolds number of the flow, i.e. at high flow velocities, the thickness of the laminar sub-layer will decrease.

Decreasing the thickness of the laminar layer will typically enhance the heat and mass transfer significantly.

This will be the case when high intensity and high power acoustic waves are applied to the outer and/or inner surface area of food product(s). The high intensity and high power acoustic waves increase the interaction between the steam molecules and the surface area of the food product(s) and thus the energy exchange at the surface area.

Reducing/minimizing the laminar sub-layer provides increased diffusion speed. Additionally, reducing/minimizing the laminar sub-layer improves the probability of collision between the steam molecules (102) and the outer and/or inner surface area (101'; 101 ") of the food product(s).

This will be explained in greater detail in connection with Figures 2a and 2b.

Furthermore, the stream of steam will also 'push' away or remove a layer of a steam/air mixture being present around the food product potentially preventing effective heating of the food product by the steam. The steam/air mixture will arise from applied steam ultimately mixing to a small extent with the ambient air.

Additionally, the use of high intensity and high power acoustic waves will enhance reaching many, or even substantially all parts of the outer and/or inner surface area regardless of curvature, folds, shape, etc.

It is to be understood that one or more acoustic wave generators (100) and/or one or more steam generators (102) may be used. It is also to be understood that acoustic waves and steam may be generated by the same device or by different devices.

Applying the steam and the high intensity and high power acoustic waves by the same device enables a more compact design of a treatment device. Furthermore, for some types of devices or generators (e.g. static sirens like Hartmann, Lavavasseur types, etc.) the steam is readily used to generate the acoustic waves avoiding the need for an additional driving force.

Such devices will create a combination of steam and acoustic waves that have substantially uniform or homogenous mixture of steam, steam velocity, and sound pressure. This enhances the treatment and increases the treatment area, as also explained in connection with Figure 4.

Applying the steam and the high intensity and high power acoustic waves by different devices may e.g. be done by a device that generates the high intensity and high power acoustic waves using pressurized air or gas or the like and supplying the steam separately by one or more steam nozzles from a steam generator. In this way, the steam supply volume could be controlled upwards or downwards with greater precision as the steam being supplied then is not responsible also for generating the appropriate sound pressure level of the high intensity and high power acoustic waves.

In one embodiment, the steam is caused to oscillate at such a high acoustic pressure level that the migration of the individual molecules reaches or exceeds the dimensional depth of the laminar sub-layer adjacent to a given food product. The kinetic energy of all the gas molecules (including steam and other ambient gas) will remove or minimize the laminar sub-layer after which the steam will heat up the surface area of the food product(s) in a fast and controllable way by condensing on the surface area.

In one embodiment, the applied acoustic waves are ultrasonic. Ultrasonic acoustic waves are less damaging to humans than sonic ones and will often be simpler to dampen and/or reflect. Alternatively, the acoustic waves can have audible or sonic frequencies.

The steam (103) may e.g. be aqueous steam and can be any type of a vaporized liquid, a gas without or with dispersed liquid droplets, and/or any mixture thereof at an appropriate temperature and pressure.

The acoustic wave generator(s) (100) may be of any type capable of delivering a sound pressure level sufficient for enhancing the steam's cleaning and/or disinfecting effect. A sufficient sound pressure level has been found to be about 120 dB (at 10 cm from the orifice of the generator) and above.

Examples of such generators (100) are e.g. the so-called Hartmann, disc, stem, or slot type or other static siren types where the steam itself may be used to generate the (ultrasonic) high intensity and high power acoustic waves as e.g. shown and explained in connection with Figures 3a - 3g and 4. Another usable type is the so-called Levavasseur type.

The high intensity and high power acoustic wave generator (100) and a steam generator (102) may be moveable in relation to the food product(s) (101) e.g. by moving the generators (100; 102) or by moving the food product(s) (101) past the generators (100; 102); e.g. situated on a conveyor belt, hanging in shackles from an overhead conveyor rail arrangement, or similar.

One or more acoustic reflectors, .e.g. of generally parabolic or elliptical form, may be used to control the propagation of the acoustic waves, e.g. as shown and explained in connection with Figures 1c and 5. Alternatively, the reflector shape may be different, e.g. in the shape of a horn or other means.

In one embodiment, the processing time may be at least approximately 0.2 seconds. In another embodiment, it may be at least approximately 0.4 seconds. In yet another embodiment it may be approximately 0.4 seconds to approximately 2 seconds. In a further embodiment, it may be approximately 0.2 seconds to approximately 5 seconds.

Figure 1c schematically illustrates yet another embodiment of the present invention. Schematically illustrated is a high intensity and high power acoustic wave generator (100) and a reflector (105) where the reflector reflects the high intensity acoustic waves (104) generated by the acoustic wave generator (100) towards at least a part of the steam (103) after exit from the acoustic wave generator (100). The reflector (105) may be an integral part of the acoustic wave generator (100) or a separate part. Furthermore, the reflector (105) can be located differently than shown in the Figure in relation to the generator (100), e.g. the lower part of the reflector may be located under the generator, etc. Additionally, more than one reflector may be provided.

It is noted, that (as opposed to the embodiment of Figure 5) only the acoustic waves and not the steam is reflected by the reflector (105).

In some embodiments, the reflector (105) has a generally parabolic or elliptical shape. In other embodiments the reflector shape could be as a horn, or different.

In this way, a very efficient and focused direction of the generated acoustic waves towards the steam is provided so that acoustic waves or ultrasound may be brought in contact with the steam at or before an appropriate treatment zone with sufficient or optimal energy.

Hereby, one or more particular efficient reflectors may be used to supply the energy from the acoustic waves to the steam thereby increasing the efficiency of the steam when treating one or more food items.

Having a generally parabolic or elliptic shape enables a very efficient focusing of the acoustic waves, i.e. near/around the focus point of the parabola or ellipsoid.

By generally parabolic shape is to be understood that the reflector has a cross section through a centerline going in the lengthwise direction (i.e. the direction between the closed end and the open end of the reflector) of the reflector that substantially or generally is parabolic.

By generally elliptic shape is to be understood that the reflector has a cross section through a centerline going in the lengthwise direction (i.e. the direction between the closed end and the open end of the reflector) of the reflector that substantially or generally is elliptic.

The use of such an efficient parabolic or elliptic reflector may be combined with various other embodiments described elsewhere where applicable.

The reflector (105) may also be arranged as described in connection with Figure 5.

Figure 2a schematically illustrates a (turbulent) flow over an inner and/or outer surface area of a food product without application of high intensity and high power acoustic waves.

Schematically shown is an outer or inner surface area (101') of at least one food product (101) with a gas or a mixture of gases comprising steam (103) surrounding and contacting the surface area (101'). The surface area (101') may also have water droplets on the surface area arising from already condensed steam.

Thermal energy can be transported through gas by conduction and also by the movement of the gas from one region to another. This process of heat or energy transfer associated with gas movement is usually referred to as convection. When the gas motion is caused only by buoyancy forces set up by temperature differences, the process is normally referred to as natural or free convection; but if the gas motion is caused by some other mechanism, it is usually referred to as forced convection. With a condition of forced convection there will be a laminar boundary layer (311) near to the surface area (101'), even if there is a strong forced convection causing turbulence in the gas near the surface area. The thickness of this layer is a decreasing function of the Reynolds number of the flow, so that at high flow velocities, the thickness of the laminar boundary layer (311) will decrease. When the flow becomes turbulent the layer is divided into a turbulent boundary layer (312) and a laminar sub-layer (313). For nearly all practically occurring gas flows, the flow regime will be turbulent in the entirety of the streaming volume, except for the laminar sub-layer (313) covering the surface area (101') wherein the flow regime is laminar. Considering a gas molecule (315) in the laminar sub-layer (313), the velocity (316) will be substantially parallel to the surface area (101') and equal to the velocity of the laminar sub-layer (313). Heat or energy transport across the laminar sub-layer will be by conduction or radiation, due to the nature of laminar flow.

Furthermore, heat transfer across the laminar sub-layer will primarily be by diffusion. The presence of the laminar sub-layer (313) does not provide optimal or efficient heat transfer.

The principal impediment to the transfer or transmission of heat, energy and/or mass from a gas to a solid surface area is the boundary layer (311) of the gas, which adheres to the solid surface area. Even when the motion of the gas is fully turbulent, the laminar sub-layer (313) exists and obstructs mass transport and/or heat transfer.

Figure 2b schematically illustrates a flow over an inner and/or outer surface area of a food product, where the effect of applying high intensity and high power acoustic waves to/in gas surrounding or contacting the surface area is illustrated.

More specifically, Figure 2b illustrates the conditions when the inner and/or outer surface area (101') of a food product (101) is subjected to high intensity and high power (ultrasonic) acoustic waves e.g. supplied by a gas-driven acoustic wave generator (not shown; see e.g. 100 in the other Figures). Considering a gas molecule/particle (315) in the laminar sub-layer, the velocity (316) will be substantially parallel to the surface area (101') and equal to the velocity of the laminar sub-layer prior to applying ultrasound. In the direction of the emitted sound field to the surface area (101') in Figure 2b, the oscillating velocity of the gas or steam molecule (315) has been increased significantly as indicated by arrows (317). As an example, a maximum velocity of v= 4.5 m/sec and a displacement of +/- 32 µm can be achieved where the frequency is f=22 kHz and the sound pressure level is about 160 dB. The corresponding (vertical) displacement in Figure 2a is substantially 0 since the molecule follows the laminar air stream along the surface area. As a result, the acoustic waves will reduce the laminar sub-layer and will cause an increased heat transfer and heat transfer rate affected by the steam condensing on the outer and/or inner surface area (101 101 ") of the food product(s) (101).

The sound pressure level is in one embodiment substantially 120 dB or larger. In an alternative embodiment, the sound pressure level is substantially 140 dB or larger. In yet another embodiment, the sound pressure level is substantially 160 dB or larger. Furthermore, the sound pressure level may be selected within the range of approximately 140 - 165 or approximately 120 - 165 dB. The sound pressure level may be approximately 120 to approximately 180 dB.

Therefore, the minimization or elimination of the laminar sub-layer has the effect that heat or energy transfer between the outer and/or inner surface area (101'; 101") of a food product (101) and the surrounding or contacting steam (103) is greatly increased, as the reduced size of the laminar sub-layer correspondingly reduces hindrance of heat or energy transfer to the surface area of the food product (101). Power is supplied in the form of steam and a steam zone around the product will during use continuously be removed to prevent condensation and insulation whereby the natural microstructures in the surface area are not shielded from the steam and do not prevent steam from reaching them. Energy will be supplied to the food product due to the steam condensing on the surface area.

This will effectively cause an enhanced reaction between the steam (103) and the food product allowing for a more efficient cleaning and/or disinfecting of the food product(s:).

Figure 3a schematically illustrates a preferred embodiment of a device (100) for generating high intensity and high power acoustic waves. Pressurized gas, here in the form of pressurized steam is passed from a tube or chamber (309) through a passage (303) defined by the outer part (305) and the inner part (306) to an opening (302), from which the gas is applied in a jet towards a cavity (304) provided in the inner part (306). If the gas pressure is sufficiently high then oscillations are generated in the gas fed to the cavity (304) at a frequency defined by the dimensions of the cavity (304) and the opening (302). The pressure may e.g. be ≥ 1.1 bar or typically 1.1 - 6.0 bar or preferably 1.4 - 4.0 bar. An ultrasound device of the type shown in Figure 3a is able to generate an ultrasonic acoustic pressure level of up to about 160 dB at a gas pressure of about 4 atmospheres. The ultrasound device may e.g. be made from brass, aluminum or stainless steel or in any other sufficiently hard material to withstand the acoustic pressure and temperature to which the device is subjected during use. The method of operation is also illustrated in Figure 3a, in which the generated ultrasound (104) is directed towards an outer and/or inner surface area (101'; 101") of a food product (101) to be treated.

Figure 3b shows an embodiment of a high intensity and high power acoustic wave device in form of a disc-shaped disc generator. Shown is a preferred embodiment of a high intensity and high power ultrasonic acoustic wave generator (100), i.e. a so-called disc generator. The device (100) comprises an annular outer part (305) and a cylindrical inner part (306), in which an annular cavity (304) is recessed. Through an annular gas passage (303) gases - here in the form of steam - may be diffused to the annular opening (302) from which it may be conveyed to the cavity (304). The outer part (305) may be adjustable in relation to the inner part (306), e.g. by providing a thread or another adjusting device (not shown) in the bottom of the outer part (305), which further may comprise fastening means (not shown) for locking the outer part (305) in relation to the inner part (306), when the desired interval there between has been obtained. Such an ultrasound device may generate a frequency of about 22 kHz at a gas pressure of 4 atmospheres. The molecules of the gas are thus able to migrate up to 32 µm about 22,000 times per second at a maximum velocity of 4.5 m/s. These values are merely included to give an idea of the size and proportions of the ultrasound device and by no means limit of the shown embodiment.

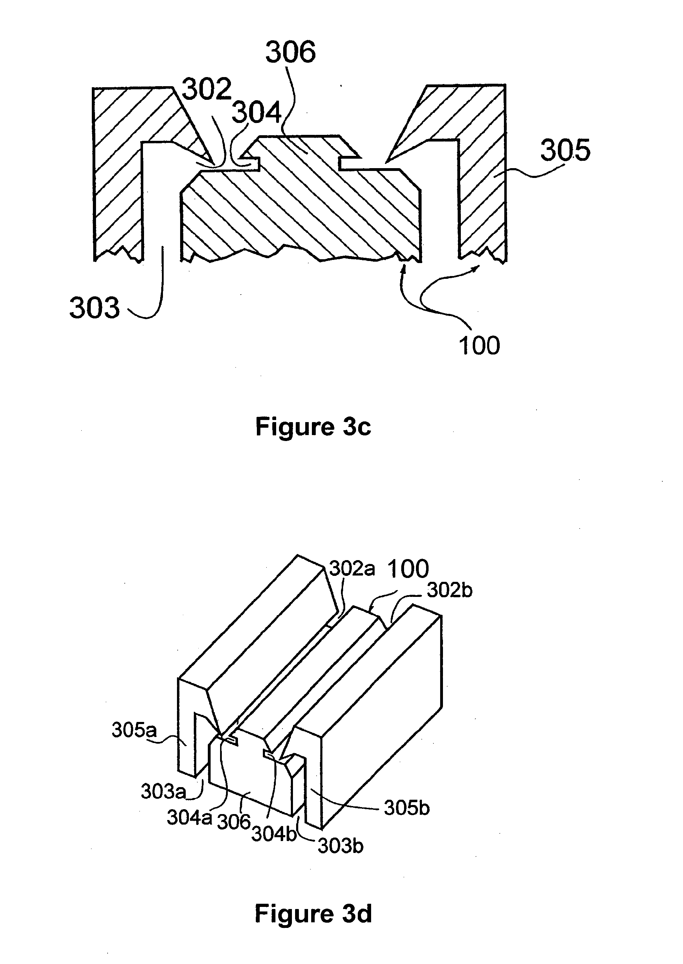

Figure 3c is a sectional view along the diameter of the high intensity and high power acoustic wave device (100) in Figure 3b illustrating the shape of the opening (302), the gas passage (303) and the cavity (304) more clearly. It is further apparent that the opening (302) is annular. The gas passage (303) and the opening (302) are defined by the substantially annular outer part (305) and the cylindrical inner part (306) arranged therein. The gas jet applied from the opening (302) hits the substantially circumferential cavity (304) formed in the inner part (306), and then exits the ultrasound device (100). As previously mentioned the outer part (305) defines the exterior of the gas passage (303) and is further bevelled at an angle of about 30° along the outer surface of its inner circumference forming the opening of the ultrasound device, wherefrom the gas jet may expand when diffused. Jointly with a corresponding bevelling of about 60° on the inner surface of the inner circumference, the above bevelling forms an acute-angled circumferential edge defining the opening (302) externally. The inner part (306) has a bevelling of about 45° in its outer circumference facing the opening and internally defining the opening (302). The outer part (305) may be adjusted in relation to the inner part (306), whereby the pressure of the gas jet hitting the cavity (304) may be adjusted. The top of the inner part (306), in which the cavity (304) is recessed, is also bevelled at an angle of about 45° to allow the oscillating gas jet to expand at the opening of the ultrasound device.

Figure 3d illustrates an alternative embodiment of a high intensity and high power acoustic wave device, which is shaped as an elongated body. Shown is an ultrasonic high intensity and high power acoustic wave generator comprising an elongated substantially rail-shaped body (100), where the body is functionally equivalent with the embodiments shown in Figures 3a and 3b, respectively. In this embodiment the outer part comprises two separate rail-shaped portions (305a) and (305b), which jointly with the rail-shaped inner part (306) form an ultrasound device (100). Two gas passages (303a) and (303b) are provided between the two portions (305a) and (305b) of the outer part (305) and the inner part (306). Each of said gas passages has an opening (302a), (302b), respectively, conveying emitted gas from the gas passages (303a) and (303b) to two cavities (304a), (304b) provided in the inner part (306). One advantage of this embodiment is that a rail-shaped body is able to coat a far larger surface area than a circular body. Another advantage of this embodiment is that the ultrasound device may be made in an extruding process, whereby the cost of materials is reduced.

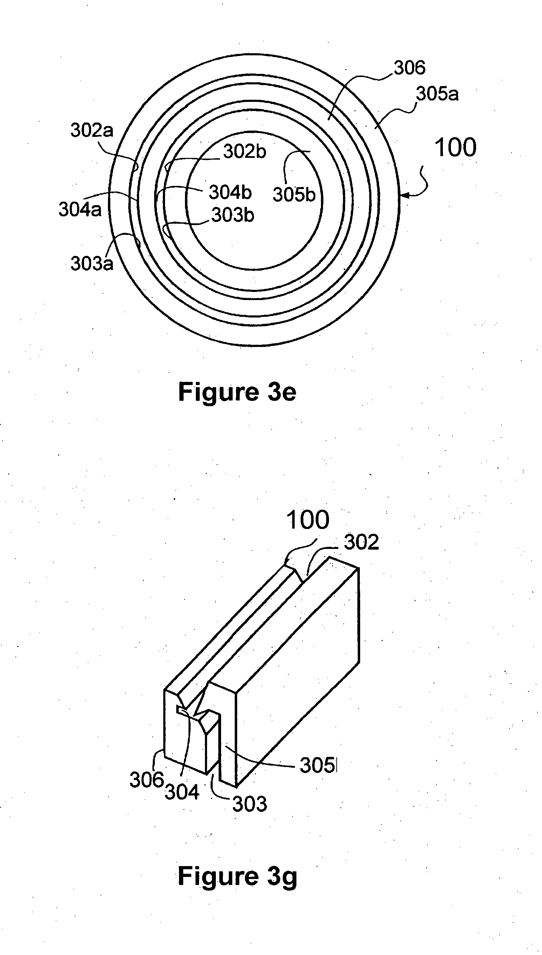

Figure 3e shows a high intensity and high power acoustic wave device of the same type as in Figure 3d but shaped as a closed curve. The embodiment of the gas device shown in Figure 3d does not have to be rectilinear. Figure 3e shows a rail-shaped body (100) shaped as three circular, separate rings. The outer ring defines an outermost part (305a), the middle ring defines the inner part (306) and the inner ring defines an innermost outer part (305b). The three parts of the ultrasound device jointly form a cross section as shown in the embodiment in Figure 3d, wherein two cavities (304a) and (304b) are provided in the inner part, an wherein the space between the outermost outer part (305a) and the inner part (306) defines an outer gas passage (303a) and an outer opening (302a), respectively, and the space between the inner part (306) and the innermost outer part (305b) defines an inner gas passage (304b) and an inner opening (302b), respectively. This embodiment of an ultrasound device is able to affect a very large area at a time and thus treat the surface of large objects.

Figure 3f shows a high intensity and high power acoustic wave device of the same type as in Figure 3d but shaped as an open curve. As shown it is also possible to form an ultrasonic high intensity and high power acoustic wave generator of this type as an open curve. In this embodiment the functional parts correspond to those shown in Figure 3d and other details appear from this portion of the description for which reason reference is made thereto. Likewise it is also possible to form an ultrasonic high intensity and high power acoustic wave generator with only one opening as described in Figure 3b. An ultrasonic high intensity and high power acoustic wave generator shaped as an open curve is applicable where the surfaces of the treated object have unusually shapes. A system is envisaged in which a plurality of ultrasonic high intensity and high power acoustic wave generators shaped as different open curves are arranged in an apparatus according to the invention.

Figure 3g illustrates an alternative embodiment of a high intensity and high power acoustic wave device, which is shaped as an elongated body. This embodiment correspond to the embodiment of Figure 3d but 'cut in half'.

Figure 4 illustrates a steam (and acoustic) generator in the form of a static siren and a traditional jet device.

Shown are a steam and acoustic generator (100) and a jet device (400) and a food product (100). In the Figure, do is an initial diameter of each specific device of the steam, dₙ is a nozzle diameter of each specific device, and dₜ is a diameter of a covered area of a food product (100) for each specific device.

The jet device (400) primarily consists of a nozzle and is driven by a steam source (not shown). The steam (103) will after exiting the jet device (400) have a diameter do being equal to the diameter of the nozzle dₙ and will expand according with a divergence angle of about 12° and being nearly constant according to the theory of fluid mechanics (see e.g. Landau, L. and Lifshitz, E. Fluid mechanics. Butterworth-Heinemann, Oxford (2000) pp. 149-151 and pp. 316-320) which will give a given area of a diameter dₜ (402) as given by the divergence angle and the distance to the food product (100). Typically, the area dₜ will be about 20 mm in diameter for such jet devices.

The steam and acoustic generator (100) comprises a nozzle or the like driven by a steam source (not shown) that for the comparisons sake is of the same type as the jet device and therefore have the same diameter of the nozzle dₙ as the jet device. In front of the nozzle, a resonator or cavity (304) is located.

The resonator or cavity (304) is responsible for generating the acoustic waves.

The steam will have to move around the resonator to exit the generator and its free movement will start with an exit diameter do being larger than the nozzle diameter dₙ. The steam (103) will after exit of the device expand in a similar manner. Due to the bigger exit diameter, the treatment area dₜ (402') of the steam and acoustic generator (100) will be bigger than for the jet device (400).

The shape and size of the resonator (304) may be modified and optimized for optimizing the treatment area dₜ (402').

Additionally, the resonator or cavity (304) will reduce the velocity of the steam due to kinetic energy loss from the acoustic wave generation and fluid-dynamic resistance so that the velocity is reduced from a supersonic level to a sub-sonic level according to the present invention, i.e. below 100 m/s.

The setup of the jet device (400) will still have a supersonic velocity, i.e. well above 343 m/s.

Figure 5 illustrates an alternative embodiment with a reflector (105) where the treatment area may be increased even further. Shown are a steam and acoustic generator (100) (e.g. like a stem generator or other static siren) operating in a configuration or mode where the steam (103) and acoustic waves (not specifically shown) are projected backwards (i.e. left in Figure 5) instead of forwards from the generator (100), i.e. projected opposite the flow direction of the steam before it is leaves the nozzle.

According to this embodiment, a reflector (105) is located so that it receives the steam and acoustic waves, i.e. behind the generator (to the left in Figure 5). The reflector may e.g. be a parabolic or elliptical shaped reflector or of some other suitable shape.

The reflector (105) then reflects the high intensity and high power acoustic waves and the applied steam of a gas (103/104) towards the food product (not shown).

In this way, the treatment area may be expanded.

In this particular embodiment, both the steam and the acoustic waves are reflected (whereas in the embodiment of Figure 1c only the acoustic waves are reflected). Normally, there is a teaching for not reflecting the steam as well as the steam should not loose any energy due to convection. However, by reflecting both the steam and the acoustic waves according to this embodiment, then something additional is obtained.

If the reflector is a parabola, a substantially uniform velocity profile is obtained with nearly the same diameter as the parabola, as shown in the Figure also illustrating the velocity levels by colour.

It has been shown, that it is possible to obtain an area of about 100 mm in diameter with sufficient velocity and/or power for an efficient treatment, while (steam) jet devices typically has an area of 20 mm in diameter.

The velocity will be slowed as a result of the design to be below 100 m/s or less.

Thus substantially uniform or homogenous mixture of steam, steam velocity, and sound pressure are obtained.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of processing a food product (101), the method comprising:
applying steam of a gas (103) from a steam generator (102; 100) to at least a part of a food product (101) for a predetermined period of time thereby cleaning and/or disinfecting at least a part of the food product (101), the food product (101) having an inner surface area (101') and an outer surface area (101"), wherein the applied steam of a gas (103) is applied to at least a part of the outer (101") and/or inner surface area (101') of the food product (101) with no direct contact between the steam generator (102; 100) and the food product (101);
**characterized in that** a velocity of said gas (103) at said outer and/or inner surface area (101') of the food product (101) is at least about 8 meter pr. second and at most about 100 meter pr. second.

2. The method according to claim 1, wherein a velocity of said gas (103) at said outer and/or inner surface area (101'; 101") of the food product being applied with steam of a gas (103) is at least about 10 - 12 meter pr. second.

3. The method according to any one of claims 1 - 2, wherein said steam of a gas is supplied under pressure from a pipe through orifices small enough to allow the steam passing the orifices at high velocity and providing the steam molecules with high kinetic energy.

4. The method according to any one of claims 1 - 3, wherein the method further comprises
- applying airborne high intensity and high power acoustic waves (104) to at least a part of said steam of gas (103) causing the part of said steam of gas (103) to oscillate substantially at the frequency and substantially with the intensity and power of the acoustic waves (104).

5. The method according to claim 4, wherein a reflector (105) reflects the high intensity and high power acoustic waves (104) towards at least a part of the steam of gas (103) and wherein said reflector (105) has a generally parabolic or elliptic shape, or is formed as a horn.

6. The method according to claim 4, wherein a reflector (105) reflects the high intensity and high power acoustic waves (104) and the applied steam of a gas (103) towards the food product (101).

7. The method according to claim 6, where the applied steam and the applied acoustic waves are exiting their generator(s) away from a direction towards the food product (101) and are reflected by the reflector (105) in the direction towards the food product (101).

8. The method according to any one of claims 1 - 7, wherein said predetermined period of time may be selected from the group of:
o at least approximately 0.2 seconds
o at least approximately 0.4 seconds,
o approximately 0.4 seconds to approximately 2 seconds, and
o approximately 0.2 seconds to approximately 5 seconds.

9. The method according to any one of claims 4 - 8, wherein said high intensity and high power acoustic waves are ultrasonic acoustic waves.

10. The method according to any one of claims 4 - 9, wherein said high intensity and high power acoustic waves (104) are generated by a high intensity and high power acoustic wave generator (100) and has an acoustic sound pressure level at approximately 10 cm from an orifice of said generator (100) selected from the group of:
- at least 120 dB,
- at least 140 dB,
- at least 160 dB,
- approximately 120 to approximately 165 dB, and
- approximately 120 to approximately 180 dB.

11. The method according to any one of claims 1 - 10, wherein said steam generator (102; 100) is a static siren.

## Patentansprüche

1. Verfahren für die Verarbeitung eines Nahrungsmittelprodukts (101), wobei das Verfahren umfasst
- Anwendung von Dampf eines Gases (103) von einem Dampfgenerator (102; 100) auf zumindest einen Teil eines Nahrungsmittelprodukts (101) für eine vorgegebene Zeitperiode, wodurch zumindest ein Teil des Nahrungsmittelprodukts (101) gereinigt und/oder desinfiziert wird, wobei das Nahrungsmittelprodukt (101) einen Innenflächenbereich (101') und einen Außenflächenbereich (101") aufweist,
wobei
- der angewendete Dampf eines Gases (103) auf zumindest einen Teil des Außenflächenbereichs (101") und/oder des Innenflächenbereichs (101') des Nahrungsmittelprodukts (101) angewendet wird, wobei kein direkter Kontakt zwischen dem Dampfgenerator (102; 100) und dem Nahrungsmittelprodukt (101) besteht, und
- eine Strömungsgeschwindigkeit des Gases (103) bei dem Außen- und/oder Innenflächenbereich (101') des Nahrungsmittelprodukts (101) zumindest etwa 8 Meter je Sekunde und höchstens etwa 100 Meter je Sekunde beträgt.

2. Verfahren nach Anspruch 1, wobei eine Strömungsgeschwindigkeit des Gases (103) bei dem Außen- und/oder Innenflächenbereich (101'; 101 ") des Nahrungsmittelprodukts, welches mit Dampf eines Gases (103) beaufschlagt wird, zumindest etwa 10 - 12 Meter je Sekunde beträgt.

3. Verfahren nach einem der Ansprüche 1 - 2, wobei der Dampf eines Gases unter Druck aus einer Leitung durch Öffnungen geliefert wird, die ausreichend klein dafür sind, um zu ermöglichen, dass der Dampf die Öffnungen bei einer hohen Geschwindigkeit passieren kann, und dass die Dampfmoleküle mit hoher kinetischer Energie bereitgestellt werden können.

4. Verfahren nach einem der Ansprüche 1 - 3, wobei das Verfahren ferner umfasst:
- Anwendung von Luftschallwellen (104) mit hoher Intensität und hoher Leistung auf zumindest einen Teil des Dampfes von Gas (103), wodurch bewirkt wird, dass der Teil des Dampfes von Gas (103) im Wesentlichen mit der Frequenz und im Wesentlichen mit der Intensität und Leistung der Schallwellen (104) oszilliert.

5. Verfahren nach Anspruch 4, wobei ein Reflektor (105) die Schallwellen (104) mit hoher Intensität und hoher Leistung gegen zumindest einen Teil des Dampfes von Gas (103) reflektiert, und wobei der Reflektor (105) eine im Allgemeinen parabolische oder elliptische Form aufweist oder als ein Horn geformt ist.

6. Verfahren nach Anspruch 4, wobei ein Reflektor (105) die Schallwellen (104) mit hoher Intensität und hoher Leistung und den angewendeten Dampf eines Gases (103) gegen das Lebensmittelprodukt (101) reflektiert.

7. Verfahren nach Anspruch 6, wobei der angewendete Dampf und die angewendeten Schallwellen ihre(n) Generator(en) in eine Richtung weg vom Nahrungsmittelprodukt (101) anregen und durch den Reflektor (105) in Richtung des Nahrungsmittelprodukts (101) reflektiert werden.

8. Verfahren nach einem der Ansprüche 1 - 7, wobei die vorgegebene Zeitperiode ausgewählt sein kann aus der Gruppe bestehend aus:
o zumindest etwa 0,2 Sekunden
o zumindest etwa 0,4 Sekunden
o etwa 0,4 Sekunden bis etwa 2 Sekunden, und
o etwa 0,2 Sekunden bis etwa 5 Sekunden.

9. Verfahren nach einem der Ansprüche 4 - 8, wobei die Schallwellen mit hoher Intensität und hoher Leistung Ultraschallwellen sind.

10. Verfahren nach einem der Ansprüche 4 - 9, wobei die Schallwellen (104) mit hoher Intensität und hoher Leistung durch einen Schallwellengenerator (100) mit hoher Intensität und hoher Leistung erzeugt werden und einen Schalldruckpegel in einem Abstand von etwa 10 cm von einer Öffnung des Generators (100) aufweist, der ausgewählt ist aus der Gruppe bestehend aus:
- zumindest 120 dB,
- zumindest 140 dB,
- zumindest 160 dB,
- etwa 120 bis etwa 165 dB, und
- etwa 120 bis etwa 180 dB.

11. Verfahren nach einem der Ansprüche 1 - 10, wobei der Dampfgenerator (102; 100) eine statische Sirene ist.

## Revendications

1. Procédé de traitement d'un produit alimentaire (101), le procédé comprenant:
l'application de la vapeur d'un gaz (103) à partir d'un générateur de vapeur (102; 100) à au moins une partie d'un produit alimentaire (101) pendant une période de temps prédéterminée, en nettoyant et/ou désinfectant ainsi au moins une partie du produit alimentaire (101), le produit alimentaire (101) ayant une zone de surface intérieure (101') et une zone de surface extérieure (101"),
dans lequel la vapeur appliquée d'un gaz (103) est appliquée sur au moins une partie de la zone de surface extérieure (101") et/ou intérieure (101') du produit alimentaire (101) sans contact direct entre le générateur de vapeur (102; 100) et le produit alimentaire (101),
**caractérisé en ce qu'**une vitesse dudit gaz (103) au niveau de ladite zone de surface extérieure et/ou intérieure (101') du produit alimentaire (101) est au moins environ 8 mètres la seconde et au plus environ 100 mètres la seconde.

2. Procédé selon la revendication 1, dans lequel une vitesse dudit gaz (103) au niveau de ladite zone de surface extérieure et/ou intérieure (101'; 101") du produit alimentaire étant appliquée avec une vapeur d'un gaz (103) est au moins environ 10 à 12 mètres la seconde.

3. Procédé selon l'une quelconque des revendications 1 à 2, dans lequel ladite vapeur d'un gaz est fournie sous pression à partir d'un tuyau à travers des orifices suffisamment petits pour permettre à la vapeur de passer par les orifices à grande vitesse et de pourvoir les molécules de vapeur de l'énergie à forte cinétique.

4. Procédé selon l'une quelconque des revendications 1 à 3, dans lequel le procédé en outre comprend
- l'application des ondes acoustiques dans l'air de haute intensité et à haute puissance (104) à au moins une partie de ladite vapeur de gaz (103) provoquant la partie de ladite vapeur de gaz (103) à osciller essentiellement à la fréquence et essentiellement avec l'intensité et la puissance des ondes acoustiques (104).

5. Procédé selon la revendication 4, dans lequel un réflecteur (105) réfléchit les ondes acoustiques de haute intensité et à haute puissance (104) vers au moins une partie de la vapeur de gaz (103), et dans lequel ledit réflecteur (105) présente une forme généralement parabolique ou elliptique, ou est formé comme une corne.

6. Procédé selon la revendication 4, dans lequel un réflecteur (105) réfléchit les ondes acoustiques de haute intensité et à haute puissance (104) et la vapeur appliquée d'un gaz (103) vers le produit alimentaire (101).

7. Procédé selon la revendication 6, dans lequel la vapeur appliquée et les ondes acoustiques appliquées font sortir leur générateur(s) hors d'une direction vers le produit alimentaire (101) et sont réfléchies par le réflecteur (105) dans la direction du produit alimentaire (101).

8. Procédé selon l'une quelconque des revendications 1 à 7, dans lequel ladite période de temps prédéterminée est sélectionnée parmi le groupe:
∘ d'au moins environ 0,2 secondes,
∘ d'au moins environ 0,4 secondes,
∘ d'environ 0,4 secondes à environ 2 secondes, et
∘ d'environ 0,2 secondes à environ 5 minutes.

9. Procédé selon l'une quelconque des revendications 4 à 8, dans lequel lesdites ondes acoustiques de haute intensité et à haute puissance sont des ondes acoustiques ultra-sonores.

10. Procédé selon l'une quelconque des revendications 4 à 9, dans lequel lesdites ondes acoustiques de haute intensité et à haute puissance (104) sont générées par un générateur d'ondes acoustiques de haute intensité et à haute puissance (100) et présentent un niveau de pression acoustique à environ 10 cm d'un orifice dudit générateur (100) étant sélectionné parmi le groupe:
- d'au moins 120 dB,
- d'au moins 140 dB,
- d'au moins 160 dB,
- d'environ 120 à environ 165 dB, et
- d'environ 120 à environ 180 dB.

11. Procédé selon l'une quelconque des revendications 1 à 10, dans lequel ledit générateur de vapeur (102; 100) est une sirène statique.
